# EUROPÄISCHE PATENTSCHRIFT

(11) **EP 1 369 389 B1**
(45) Veröffentlichungstag und Bekanntmachung des Hinweises auf die Patenterteilung: **28.02.2007**
(21) Anmeldenummer: 03010246.1
(22) Anmeldetag: 07.05.2003
(51) Int. Cl.: C03B 23/11, C03B 23/18, C03B 23/09

(54) **Verfahren zur Herstellung von Glasbehältnissen aus einem Rohrhalbzeug**
Method for producing glass containers from a tube preform
Procédé de fabrication de récipients de verre à partir d'une préforme tubulaire

(30) Priorität: 05.06.2002 DE 10224833
(43) Veröffentlichungstag der Anmeldung: 10.12.2003
(73) Patentinhaber: Schott AG, 55122 Mainz (DE)
(72) Erfinder: Rausch, Heinz, 95448 Bayreuth (DE); Dick, Erhard, 95701 Pechbrunn (DE)
(74) Vertreter: Dr. Weitzel & Partner

(56) Entgegenhaltungen:
- EP-A- 0 111 710
- DE-A- 3 341 313
- DE-B- 1 114 992
- DE-U- 8 232 133

## Beschreibung

Die Erfindung betrifft ein Verfahren zum Herstellen von Glasbehältnissen, insbesondere zur Befüllung mit pharmazeutischen Produkten, aus einem Rohrhalbzeug,

Aus EP-B-111 710 ist ein Verfahren zum Herstellen von Glasrohrfläschchen aus einem Glasrohrhalbzeug vorbekannt. Das Glasrohrhalbzeug wird dabei aus einem kontinuierlichen Glasstrang gebildet. Dazu wird eine Rohrlänge aus dem Glasrohrstrang abgetrennt und an beiden Enden erweicht. Die erweichten Enden werden axial ausgezogen, bis das Glasrohr In diesem Bereich zusammenfällt und somit geschlossene Rohrenden erhalten werden. In unmittelbarer Nähe eines der beiden geschlossenen Rohrenden wird eine punktförmige Öffnung angebracht und die so präparierte Rohrlänge in Form des Rohrhalbzeuges in einen Fertigungsautomaten eingesetzt und dort zu Glasfläschchen verarbeitet. Das Rohrhalbzeug wird in vertikaler Richtung derart in den Fertigungsautomaten eingesetzt, dass die punktförmige Öffnung in vertikaler Richtung unten liegt. Am oberen Ende wird die Rohrwandung mäßig erwärmt. Oberhalb der punktförmigen Öffnung wird die Rohrlänge dann thermisch durchtrennt, wobei sich auch an dem restlichen Rohrhalbzeug vorübergehend ein Boden bildet, welcher jedoch in Folge des sich aufbauenden Überdruckes sofort wieder aufplatzt. An dieser Stelle wird die Mündung des ersten Rohrfläschchens geformt. In einem, der Länge des Rohrfläschchens entsprechenden Abstand von dieser Stelle, wird das Rohrhalbzeug dann erneut thermisch durchtrennt, wobei gleichzeitig der Boden des ersten Rohrfläschchens und ein weiterer Boden aus dem restlichen Rohr gebildet wird, welcher jedoch in Folge des sich aufbauenden inneren Überdrucks sofort wieder aufplatzt. Diese Verfahrensschritte werden an dem restlichen Rohrhalbzeug wiederholt, wodurch einzelne Rohrfläschchen entstehen, die eine für pharmazeutische Anwendungen geeignete Sauberkeit aufweisen.

Die Rohrhalbzeuge selbst, die beispielsweise, wie in DE 82 32 133 U1 beschrieben, als beidseitig geschlossenes Rohrhalbzeug mit mittels eines Films verschließbarer Öffnung ausgeführt sein können, werden in der Regel zeitlich versetzt zur eigentlichen Herstellung der Glasbehältnisse hergestellt. Diese werden dann nach einem Verfahren, wie es beispielsweise in der Druckschrift DE-A -27 29 966 beschrieben ist, zu Rohrpaketen verpackt, wobei sie in dichtester Packung neben- und übereinanderliegend von einer Haube aus flexiblem Material umschlossen werden. Sie gelangen dann in doppelt geschütztem Zustand zu dem Glasbehältnishersteller, welcher das bereits beschriebene Verfahren benutzt. Zum vollständigen Verschluss des einzelnen Rohrhalbzeuges wird ferner die als Entlüftungsbohrung fungierende punktförmige Öffnung durch einen Film wieder verschlossen. Dieser Film ist derart beschaffen, dass er bei mäßiger Erwärmung erweicht und dann unter geringem Druck aufplatzt oder aber aus einem Material besteht, welches rückstandsfrei verbrennt. Damit wird die für pharmazeutische Anwendungen erforderliche Reinheit gewährleistet. Die Fertigung des Rohrhalbzeuges zeichnet sich dabei jedoch durch einen erhöhten Aufwand aus. Ferner wird zur Fertigung von Glasbehältnissen, insbesondere von Glasbehältnissen für pharmazeutisch Anwendungen, immer ein Teil der Rohrlänge des Rohrhalbzeuges verworfen, und zwar der Teil mit der Entlüftungsbohrung und der bei Unterteilung in die Rohrfläschchenlängen verbleibende Teil des Rohrhalbzeuges mit geringerer Länge als das Rohrfläschchen. Ferner wurde beobachtet, dass aus einem derartigen Rohrhalbzeug entsprechend des beschriebenen Verfahrens auch eine bestimmte Rate an fehlerhaften Glasbehältnissen nur durch eine präzise Abstimmung der einzelnen Prozessparameter bei der Glasbehältnisherstellung ausgeschlossen werden kann.

Ein Verfahren zur Herstellung eines Rohrhalbzeuges mit beidseitig verschlossenen Endbereichen ist aus der Druckschrift DE 33 41 313 vorbekannt. Dabei wird von einem kontinuierlichen Glasrohrstrang eine Rohrlänge abgetrennt, eines der beiden offenen Enden des Rohres verschlossen und an der Rohrwandung eine kleine Öffnung angebracht, danach wird das zweite Ende des Rohres verschlossen. Ein derartiges Rohrhalbzeug wird dann zur Herstellung von Ampullen oder Fläschchen genutzt, wobei dies auch in einem Fertigungsautomaten eingesetzt werden kann.

Der Erfindung liegt daher die Aufgabe zugrunde, ein Verfahren zur Herstellung von Glasbehältnissen, insbesondere für pharmazeutische Anwendungen, beispielsweise in Form von Glasrohrfläschchen, Glasampullen sowie Glasspritzen, zu schaffen, das sich durch eine hohe Wirtschaftlichkeit auszeichnet. Dabei ist insbesondere auf eine optimale Ausnutzung der gesamten Länge des Rohrhalbzeuges abzustellen. Ferner ist der fertigungs- und steuerungstechnische Aufwand bei der Herstellung der Glasbehältnisse möglichst gering zu halten bzw. soll durch einen größeren Toleranzbereich charakterisiert sein.

Diese Aufgabe wird durch die Merkmale von Anspruch 1 gelöst.

Das Rohrhalbzeug zur Herstellung von Glasbehältnissen, insbesondere mit Eignung für pharmazeutische Anwendungen, insbesondere Glasrohrfläschchen, Glasampullen und Glasspritzen, umfasst eine Rohrwandung mit zwei Endbereichen, wobei der eine erste Endbereich der Rohrwandung unter Bildung eines Bodens geschlossen ist. Im Bereich des ersten Endbereiches ist in der Rohrwand wenigstens eine Entlüftungsbohrung vorgesehen. Diese ist vorzugsweise senkrecht zur Rohrhalbzeugachse ausgeführt. Der Durchmesser dieser Entlüftungsbohrung liegt vorzugsweise in einem Bereich von > 0 bis < 1 % der bei einem herkömmlichen beidseitig offenen Rohr vorhandenen offenen Fläche. Der andere, zweite Endbereich ist frei von einem Verschluss, d.h., dieser weist eine Öffnung auf oder ist vollständig offen. Zur Fertigung eines derartigen Rohrhalbzeuges wird von einem kontinuierlichen Glasrohrstrang eine Rohrlänge abgetrennt. Das eine der beiden offenen Enden dieser Rohrlänge wird erweicht und mittels einer in axialer Richtung wirkenden Kraft ausgezogen bis das Rohr zusammenfällt und somit ein erster planerer oder leicht nach innen, d.h. in den durch die Rohrwandung begrenzten Innenraum gerichteten gewölbten Boden entstanden ist. Nach dem Verschluss des einen Endbereiches wird dann im Bereich dieses Endbereiches die Entlüftungsbohrung in die Rohrwandung eingearbeitet. Dies kann beispielsweise durch Einbrennen mittels eines Stichbrenners erfolgen. Die Abtrennung aus einem kontinuierlichen Glasrohrstrang kann durch eine etwas erhöhte Partikelfracht im Bereich des offenen Endes charakterisiert sein. Es wurde jedoch festgestellt, dass in Zusammenhang mit dem erfindungsgemäßen Verfahren zur Herstellung von Glasbehältnissen, insbesondere Glasbehältnissen mit Eignung für pharmazeutische Anwendungen, dieser Nachteil durch die dort erfolgenden Verfahrensschritte wieder kompensiert wird und trotzdem Glasbehältnisse mit sehr hoher Reinheit und damit Eignung für pharmazeutische Anwendungen hergestellt werden können. Das Rohrhalbzeug zeichnet sich somit durch einen geringeren fertigungstechnischen Aufwand gegenüber dem beschriebenen Stand der Technik aus. Ferner sind für den Transport des Rohrhalbzeuges zur eigentlichen Fertigungsstelle für die Glasbehältnisse keine besonderen Maßnahmen erforderlich und es können die bereits aus dem Stand der Technik bekannte Verfahren zur Abpackung in Rohrpaketen genutzt werden.

Bezüglich der Ausbildung des Bodens am Rohrhalbzeug bestehen keine Beschränkungen. Dieser kann plan oder aber leicht nach innen gewölbt ausgeführt sein. Die Geometrie des Bodens ist dabei eine Funktion der Temperatur und der Größe der Kraft, welche an dem zu verschließenden Rohrendbereich wirken.

Um ausgehend vom offenen Rohrendbereich mit der Herstellung von Glasbehältnissen zu beginnen, weist der offene Endbereich in vorteilhafter Weise einen Planlauf von > 0 und ≤ 1 mm, vorzugsweise ≤ 0,8 mm, auf.

Zur Fertigung der Glasbehältnisse, insbesondere mit Eignung für den Einsatz in pharmazeutischen Bereichen, insbesondere in Form von Glasfläschchen, Glasampullen oder Glasspritzen, wird das Rohrhalbzeug in einen Fertigungsautomaten eingesetzt und dort zu den Glasrohrbehältnissen verarbeitet. Das Rohrhalbzeug wird dabei vorzugsweise in vertikaler Anordnung derart In den Fertigungsautomaten eingesetzt, dass der geschlossene Endbereich mit der Entlüftungsöffnung in vertikaler Richtung sich oben befindet. Der zweite offene Endbereich befindet sich in vertikaler Richtung dann unten. Am zweiten offenen Endbereich kann sofort mit der Fertigung begonnen werden, indem dieser erwärmt wird und die gewünschte Mündungsform geformt wird. In einem, der Länge des Glasbehältnisses entsprechenden, Abstand wird dann das Rohrhalbzeug, ausgehend von der geformten Mündung, thermisch durchtrennt, wobei sich bei diesem Vorgang gleichzeitig der Boden des Glasbehältnisses ausbildet. Dieser kann plan oder aber mit in den durch die Rohrwandung begrenzten Innenraum gerichteten Wölbung ausgebildet werden. Die einzelnen Verfahrensschritte werden dann am Rohrhalbzeug fortlaufend wiederholt, wobei weitere Glasbehältnisse entstehen. Vorzugsweise wird das bereits gefertigte Glasrohrbehältnis aus der Führung des Rohrhalbzeuges entfernt, so dass das übrige Rohrhalbzeug mit dem nunmehr offenen Endbereich in die Position des nunmehr entfernten Glasbehältnisses verschoben werden kann. Dies bietet den Vorteil, dass die Erwärmungs- und Formgebungseinheit zur Herstellung der Mündung nicht verschoben werden müssen und bei vertikaler Anordnung des Rohrhalbzeuges dieses in Schwerkraftrichtung von allein diese Position einnehmen kann. Ein wesentlicher Vorteil dieser Lösung besteht darin, dass zum einen mit der Fertigung der Glasbehältnisse sofort ohne Verwurf von Material des Rohrhalbzeuges begonnen werden kann und ferner aufgrund der immer vorhandenen Entlüftungsbohrung die Druckverhältnisse im Rohrhalbzeug leicht beherrschbar sind, so dass keine Beschädigungen oder fehlerhafte Glasbehältnisse aufgrund eventueller Druckspitzen im Rohrhalbzeug entstehen. Ferner kann es bereits bei der thermischen Durchtrennung zur Ausbildung eines Bodens am verbleibenden Rohrhalbzeug kommen, wobei es in keiner Weise problematisch ist, da durch gezielte Erwärmung dieses Endbereiches die erforderliche Öffnung und damit auch Mündungsform wieder eingearbeitet werden kann. Der sich eventuell bei der Herstellung des Rohrhalbzeuges ergebende Nachteil einer erhöhten Partikelfracht am offenen Endbereich kann durch dieses Verfahren, insbesondere die gezielte Erwärmung, wieder kompensiert werden.

Die erfindungsgemäße Lösung bietet somit insbesondere bei der Massenherstellung von Glasbehältnissen einen erheblichen wirtschaftlichen Vorteil durch die Verwendung eines Rohrhalbzeuges mit einseitig geschlossenem Endbereich und Entlüftungsbohrung gegenüber den bekannten Lösungen mit beidseitig geschlossenem Endbereich und Entlüftungsbohrung oder einseitig geschlossenem Endbereich ohne Entlüftungsbohrung. Die Vorbereitung durch die Abtrennung des Bereiches mit der Entlüftungsbohrung entfällt, ferner können die Druckverhältnisse aufgrund der vorhandenen Entlüftungsbohrung sicher beherrscht werden, so dass diese zu keiner negativen Beeinträchtigung bei der Fertigung von Glasbehältnissen führen.

In einer besonders vorteilhaften Ausgestaltung und in Abhängigkeit der gewünschten Mündungsform wird die Erwärmung des zweiten offenen Endbereiches gesteuert. Der Vorteil ist, dass durch die gesteuerte Erwärmung eine Öffnung mit gewünschtem Durchmesser erzielt wird.

Gemäß einer weiteren vorteilhaften Ausgestaltung der Erfindung erfolgt das Verfahren automatisiert. Dies bietet die Möglichkeit eines erhöhten Durchsatzes, insbesondere bei der Massenfertigung.

Die erfindungsgemäße Lösung wird nachfolgend anhand von Figuren verdeutlicht. Darin ist im einzelnen folgendes dargestellt:
- Figur 1: verdeutlicht anhand eines Längsschnittes ein gestaltetes Rohrhalbzeug;
- Figur 2: verdeutlicht in schematisch stark vereinfachter Darstellung das Grundprinzip des Verfahrens zur Herstellung von Glasbehältnissen, insbesondere mit Eignung für den Einsatz im pharmazeutischen Bereich.

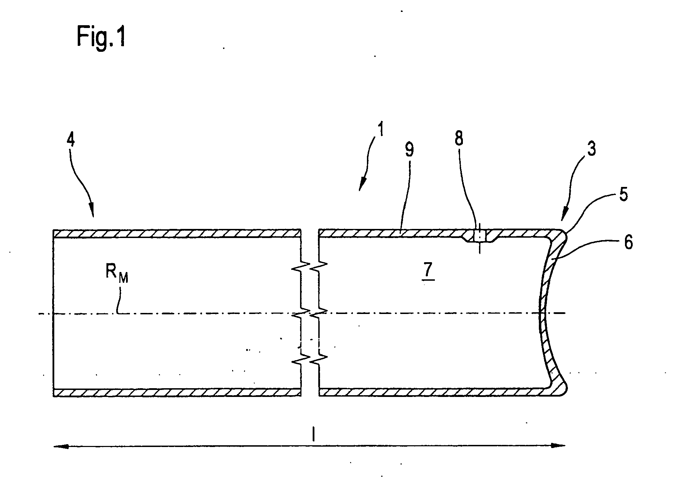

Die Figur 1 verdeutlicht in schematisch stark vereinfachter Darstellung einen Längsschnitt durch ein gestaltetes Rohrhalbzeug 1, welches zur Herstellung von Glasbehältnissen 2 verwendet wird, die beispielsweise in Form von Glasfläschchen, Glasampullen oder Glasspritzen ausgeführt sein können, und die insbesondere eine Eignung für pharmazeutische Anwendungen aufweisen. Das Rohrhalbzeug 1 ist dabei im Längsschnitt dargestellt. Dieses weist zwei Endbereiche, einen ersten Endbereich 3 und einen zweiten Endbereich 4, auf. Der erste Endbereich 3 ist dabei verschlossen. Dazu ist direkt am Rohrende 5 ein Boden 6 vorgesehen. Der Boden kann dabei, wie im dargestellten Fall, zum durch die Wandung des Bodens begrenzten Innenraum 7 des Rohrhalbzeuges hin gewölbt ausgeführt sein. Denkbar ist auch eine hier nicht dargestellte plane Ausführung des Bodens 6. Das Rohrhalbzeug 1 ist ferner im zweiten Endbereich 4 offen. Zusätzlich ist eine Entlüftungsbohrung 8 vorgesehen, welche in der Wandung 9 des Rohrhalbzeuges 1 eingearbeitet ist und vorzugsweise in der Nähe des Bodens 6 liegt. Die Entlüftungsbohrung ist dabei senkrecht zur Rohrmittenachse R_{M} ausgeführt. Diese ist ferner im ersten Endbereich 3 angeordnet.

Das Rohrhalbzeug 1 wird dabei aus einem kontinuierlichen Glasrohrstrang endlicher Länge gewonnen. Dabei wird aus dem Glasrohrstrang ein, das Rohrhalbzeug 1 bildende Rohrelement mit der Länge 1 getrennt. Das dabei entstehende Rohrelement ist an beiden Endbereichen geöffnet. Der eine der beiden offenen Endbereiche der Rohrlänge 1 wird dann erweicht und mittels einer in axialer Richtung wirkenden Kraft ausgezogen bis das Rohrelement in diesem Bereich zusammenfällt und ein erster planerer oder leicht nach innen gewölbter Boden 6 gebildet wird. Der zweite Endbereich, welcher beim fertigen Rohrhalbzeug 1 dann dem offenen Endbereich 4 entspricht, bleibt unbehandelt. Der geforderte Planlauf am offenen Endbereich wird dabei durch die Trennung, welche in der Regel thermisch erfolgt, vom Glasrohrstrang ermöglicht. Im ersten Endbereich 3 wird dann die Entlüftungsbohrung 8 eingearbeitet. Diese wird vorzugsweise mittels eines Stichbrenners angebracht.

Das so entstandene Rohrhalbzeug 1 wird dann zur Durchführung des erfindungsgemäßen Verfahrens in einen Fertigungsautomaten 10 vorzugsweise derart eingesetzt, dass der geschlossene Endbereich 3 mit der Entlüftungsbohrung 8 in vertikaler Richtung oben liegt. Die Fertigung erfolgt beginnend vom offenen Endbereich 4. Dabei wird im offenen Endbereich 4 die Rohrwandung 9 mäßig erwärmt, beispielsweise mit einer Einrichtung 11, wobei mittels einer Einrichtung 12 die gewünschte Mündung für das Glasbehältnis 2 geformt wird. Die Einrichtung zur Erwärmung 11 und die Einrichtung zur Formgebung 12 können dabei auch zu einer Einheit zusammengefasst sein.

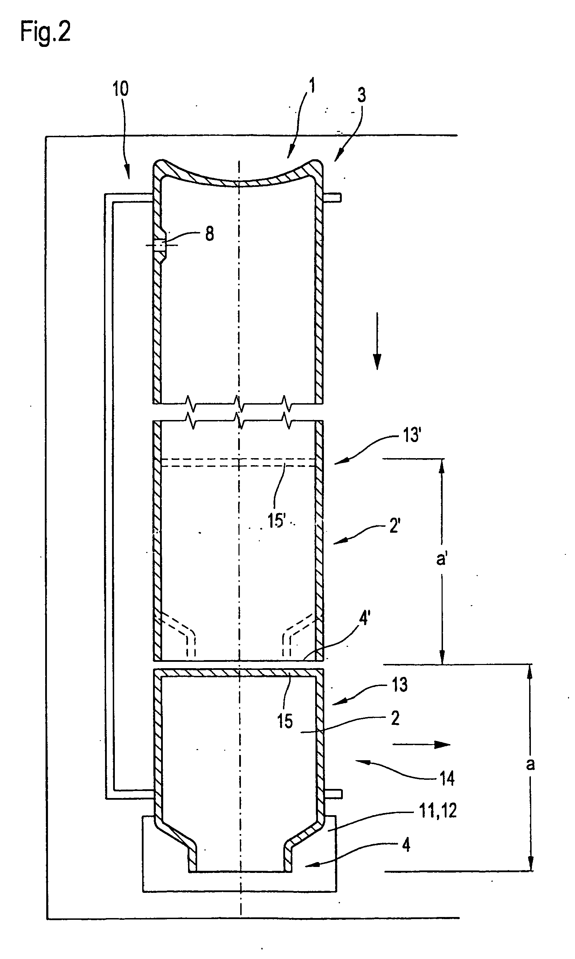

In einem Abstand a vom offenen Rohrende, insbesondere der bereits eingearbeiteten Mündung, wird das Rohrhalbzeug 1 dann thermisch durchtrennt, wobei bei der Durchtrennung am dabei entstehenden Endbereich 13 des dann das Glasbehältnis 2 bildenden Rohrteilstückes 14 sich ein Boden 15 bildet. Das so entstehende Glasbehältnis 2 wird aus dem Fertigungsautomaten 10 entsprechend der Pfeilrichtung entfernt und das Rohrhalbzeug wird in vertikaler Richtung nach unten geführt bzw. fällt nach unten. Der sich am restlichen Rohrhalbzeug 1 nach Entfernung des Glasbehältnisses 2 ergebende zweite Endbereich 4' kann aufgrund der thermischen Trennung ebenfalls entweder geschlossen, oder aber mit einer Öffnung versehen, vorliegen. Dies spielt jedoch für die weitere Fertigung keine Rolle, da dieser zweite Endbereich 4' erneut einer Erwärmung unterzogen wird, ebenfalls mit der Einrichtung 11, und mittels der Einrichtung 12 zur Formgebung die gewünschte Mündung für das Glasbehältnis 2', d.h. das zweite aus dem Rohrhalbzeug 1 gewonnene Glasbehältnis, gebildet wird. Die Druckverhältnisse im Rohrhalbzeug 1 bleiben aufgrund der vorhandenen Entlüftungsbohrung 8 überschaubar. Die sich ergebende Kontur des Glasrohrfläschchens 2' ist mittels unterbrochener Linie dargestellt. Das Glasrohrfläschchen 2'wird dann nach Entfernung des Fläschchens 2 aus dem Automaten oder zumindest der Führung in der für das Glasrohrfläschchen 2 in der Figur 2 dargestellten Position gefertigt. Im Anschluss an die Einarbeitung der Mündung erfolgt wiederholt der Durchtrennvorgang am Rohrhalbzeug 1 in einem Abstand a', wobei während des Durchtrennvorganges bzw. im Anschluss an diesen, der so entstehende Endbereich 13' des Rohrteilstückes 14' durch einen Boden 15' verschlossen wird. Dieser Vorgang kann nunmehr fortgesetzt werden bis zum Ende des Rohrhalbzeuges 1, wobei lediglich der obere Teil mit der Entlüftungsbohrung verworfen wird. Die Fertigung, beginnend am offenen Endbereich, bietet dabei den Vorteil, dass zum einen sofort mit der Herstellung von Glasbehältnissen begonnen werden kann ohne die Einplanung eines zu verwertenden Teilstückes und ferner die zur Verfügung stehende Länge des Rohrhalbzeuges 1 in optimaler Weise genutzt werden kann, da lediglich der verbleibende Endbereich mit der Entlüftungsbohrung verworfen wird und daher von vornherein keine aufwendigen Berechnungen bezüglich der Größe des Verwurfes von Nöten sind, wie bei einer Ausführung mit beidseitig geschlossenem Endbereich.

### Bezugszeichenliste

- 1: Rohrhalbzeug
- 2, 2': Glasbehältnis
- 3: erster Endbereich
- 4: zweiter Endbereich
- 5: Rohrende
- 6: Boden
- 7: Innenraum
- 8: Entlüftungsbohrung
- 9: Wandung
- 10: Fertigungsautomat
- 11: Einrichtung zur Erwärmung
- 12: Einrichtung zur Formgebung
- 13, 13': Endbereich
- 14, 14': Vorteilstück
- 15,15': Boden
- R_{M}: Rohrmittenachse
- a, a': Abstand

## Patentansprüche

1. Verfahren zur Herstellung von Glasbehältnissen (2, 2'), insbesondere Glasfläschchen, Glasampullen oder Glasspritzen aus einem Rohrhalbzeug (1) mit einer Rohrwandung (9), umfassend zwei Endbereiche (3, 4), wobei der erste Endbereich (3) unter Bildung eines Bodens (6) verschlossen ist und eine Entlüftungsbohrung (8), die im Bereich des Endbereiches (3) in der Rohrwandung (9) eingearbeitet ist, bei welchem das Rohrhalbzeug (1) in einen Fertigungsautomaten eingesetzt wird und dort zu Glasbehältnissen (2, 2') verarbeitet wird, das Rohrhalbzeug (1) wird in vertikaler Anordnung mit der Entlüftungsöffnung (8) nach oben in den Fertigungsautomaten (10) eingesetzt und sofort ohne Verwurf von Material mit der Fertigung begonnen;
das Rohrhalbzeug (1) wird am offenen Endbereich (4) erwärmt und die geforderte Mündung für das Glasbehältnis (2, 2') geformt;
in einem der Länge des Glasbehältnisses entsprechenden Abstand von der entstehenden Mündung wird das Rohrhalbzeug (1) durchtrennt, wobei sich gleichzeitig der Boden (15, 15') des Glasbehältnisses (2, 2') bildet;
die Verfahrensschritte 5.1 bis 5.3 werden wiederholt.

2. Verfahren nach Anspruch 1, **dadurch gekennzeichnet, dass** die Durchtrennung des Rohrhalbzeuges thermisch erfolgt.

3. Verfahren nach einem der Ansprüche 1 oder 2, **gekennzeichnet durch** die folgenden Merkmale:
das Glasbehältnis (2, 2') wird nach Bildung des Bodens (15, 15') aus dem Bereich der Führungsachse der Rohrhalbzeuges (1) im Fertigungsautomaten (10) entfernt;
das Rohrhalbzeug (1) wird entlang der Führungsachse um den Abstand der Länge des entfernten Glasbehältnisses geführt.

4. Verfahren nach Anspruch 3, **dadurch gekennzeichnet, dass** bei vertikaler Anordnung des Rohrhalbzeuges (1) im Fertigungsautomaten (10) der Führungsvorgang durch die Schwerkraft selbsttätig erfolgt.

5. Verfahren nach einem der Ansprüche 1 bis 4, **dadurch gekennzeichnet, dass** die Erwärmung des offenen Endbereiches (4) gesteuert wird.

6. Verfahren nach einem der Ansprüche 1 bis 5, **dadurch gekennzeichnet, dass** die Fertigung der einzelnen Glasbehältnisse (2, 2') zeitlich aufeinanderfolgend kontinuierlich erfolgt.

7. Verfahren nach einem der Ansprüche 1 bis 6, **dadurch gekennzeichnet, dass** die Herstellung der Glasbehältnisse (2, 2') automatisiert erfolgt.

## Claims

1. A method for producing glass vessels (2, 2'), especially small glass bottles, glass ampoules or glass syringes made of tubular semi-finished product (1) with a tube wall (9), comprising two end sections (3, 4), with the first end section (3) being sealed by forming a floor (6), and a venting bore (8) incorporated in the region of the end section (3) in the tube wall (9) in which the tubular semi-finished product (1) is inserted into an automatic manufacturing machine and is processed there into glass vessels (2, 2'), the tubular semi-finished product (1) is inserted into the automatic manufacturing machine (10) with vertical arrangement with the venting opening (8) facing upwardly and production is commenced immediately without any warping of material;
the tubular semi-finished product (1) is heated at the open end section (4) and the required opening for the glass vessel (2, 2') is shaped;
the tubular semi-finished product (1) is severed in a length of the glass vessel corresponding to the distance from the originating orifice, with the floor (15, 15') of the glass vessel (2, 2') being formed simultaneously;
the method steps 5.1 to 5.3 are repeated.

2. A method according to claim 1, **characterized in that** the severing of the tubular semi-finished product occurs thermally.

3. A method according to one of the claims 1 or 2, **characterized by** the following features:
after the formation of the floor (15, 15') the glass vessel (2, 2') is removed from the area of the guide axis of the tubular semi-finished product (1) in the automatic manufacturing machine (10);
the tubular semi-finished product (1) is guided along the guide axis by the distance of the length of the removed glass vessel.

4. A method according to claim 3, **characterized in that** the guide process occurs automatically by gravity in the case of vertical arrangement of the tubular semi-finished product in the automatic manufacturing machine (10).

5. A method according to one of the claims 1 to 4, **characterized in that** the heating of the open end section (4) is controlled.

6. A method according to one of the claims 1 to 5, **characterized in that** the production of the individual glass vessels (2, 2') occurs continuously in a time successive manner.

7. A method according to one of the claims 1 to 6, **characterized in that** the production of the glass vessels (2, 2') occurs in an automated way.

## Revendications

1. Procédé pour la fabrication de récipients en verre (2, 2'), en particulier de flacons en verre, d'ampoules en verre ou de seringues en verre, à partir d'un produit semi-fini tubulaire (1) ayant une paroi de tube (9), comprenant deux parties d'extrémité (3, 4), dont la première partie d'extrémité (3) est fermée pour former un fond (6), et un trou de sortie d'air (8), qui est formé au niveau de la partie d'extrémité (3) dans la paroi de tube (9), dans lequel le produit semi-fini tubulaire (1) est introduit dans un automate de fabrication et y est transformé en récipients en verre (2, 2'),
le produit semi-fini tubulaire (1) est introduit verticalement avec le trou de sortie d'air (8) vers le haut dans l'automate de fabrication (10) et la fabrication commence immédiatement sans rejet de matériau ;
le produit semi-fini tubulaire (1) est chauffé dans la partie d'extrémité (4) ouverte et l'embouchure spécifiée pour le récipient en verre (2, 2') est formée ;
le produit semi-fini tubulaire (1) est sectionné à une distance de l'embouchure formée correspondant à la longueur du récipient en verre, en formant simultanément le fond (15, 15') du récipient en verre (2, 2') ;
les étapes ci-dessus du procédé sont répétées.

2. Procédé selon la revendication 1, **caractérisé en ce que** le sectionnement du produit semi-fini tubulaire est réalisé par un moyen thermique.

3. Procédé selon l'une quelconque des revendications 1 ou 2, **caractérisé en ce que** :
le récipient en verre (2, 2') est enlevé après la formation du fond (15, 15') de la zone de l'axe de guidage du produit semi-fini tubulaire (1) dans l'automate de fabrication (10) ;
le produit semi-fini tubulaire (1) est guidé le long de l'axe de guidage sur une distance correspondant à la longueur du récipient en verre enlevé.

4. Procédé selon la revendication 3, **caractérisé en ce que** lorsque le produit semi-fini tubulaire (1) est disposé verticalement dans l'automate de fabrication (10), l'opération de guidage est réalisée automatiquement sous l'action de la gravité.

5. Procédé selon l'une quelconque des revendications 1 à 4, **caractérisé en ce que** le chauffage de la partie d'extrémité (4) ouverte est contrôlé.

6. Procédé selon l'une quelconque des revendications 1 à 5, **caractérisé en ce que** la fabrication des différents récipients en verre (2, 2') s'effectue en continu de manière successive dans le temps.

7. Procédé selon l'une quelconque des revendications 1 à 6, **caractérisé en ce que** la fabrication des récipients en verre (2, 2') est automatisée.
